# EUROPEAN PATENT APPLICATION

(11) **EP 1 700 756 A2**
(43) Date of publication of application: **13.09.2006**
(21) Application number: 06004649.7
(22) Date of filing: 07.03.2006
(51) Int. Cl.: B60R 21/20

(54) **Cover for use in airbag apparatus, and airbag apparatus**

(30) Priority: 08.03.2005 JP 2005064086; 20.07.2005 JP 2005210221; 05.08.2005 JP 2005228354; 21.10.2005 JP 2005307340
(71) Applicant: TAKATA CORPORATION, Minato-ku, Tokyo 106-8510 (JP)
(72) Inventor: Sawada, Masami Takata Corporation, Tokyo 106-8510 (JP); Hayashi, Shinji Takata Corporation, Tokyo 106-8510 (JP)
(74) Representative: Vossius & Partner

(57) **Abstract**

To facilitate manufacturing with high dimensional accuracy a cover of an airbag apparatus is provided with a door frame movable member and a door frame fixation member at a rear face of an interior panel, in which a door portion opens while the door frame movable member is lifted. When an inflator 14 is operated to blow out gas, a door frame movable member 32 is moved upward (lifted) by being pressed upward by an expanding airbag 12. The module cover 20 is burst along a tear line 22b and a door portion 24 is cut off and separated from the surrounding module cover 20. The door portion 24 is further moved upward together with the door frame movable member 32 and a tear line 22a of the door portion 24 is burst by being pressed by the airbag 12. The door portion 24 and each of the lining plate portions 32a, 32b start to open like a door being separated into two ways in the left and right directions as shown in FIG. 2, and the airbag 12 is expanded into a vehicle cabin. The door frame fixation member 34, the door frame movable member 32, and the module cover 21 are integrally formed by means of double-shot molding process (Fig. 1).

## Description

The present invention relates to an airbag apparatus mounted on a passenger seat of a motor vehicle, or the like. More particularly, the present invention relates to an airbag apparatus in which a door opens while being lifted into a vehicle cabin when the airbag is expanded. The present invention further relates to a cover for use in the airbag apparatus.

An airbag apparatus for a passenger seat mounted on a motor vehicle is provided with a folded airbag, a retainer to which the airbag is attached, an inflator (a gas generator) for expanding the airbag, a module cover or a module cover door portion to be disposed in front of the retainer, and the like.

When the inflator generates the gas, the airbag starts expanding operation, and the module cover or the module cover door portion is pushed open along a tear line so as to burst open. The airbag is then developed in a vehicle cabin to protect an occupant.

An airbag apparatus is disclosed in JP-A-2003-137054 (Patent Document 1), in which an airbag is configured such that, when the airbag is expanded, a door portion of a module cover is opened while being lifted toward a vehicle cabin so that the door portion of the module cover is smoothly opened.

FIG. 4 is a cross-sectional view illustrating the airbag apparatus disclosed in JP-A-2003-137054. FIG. 5 is a cross-sectional view illustrating the airbag apparatus in operation. FIG. 6 is a perspective view illustrating a door frame of the airbag apparatus.

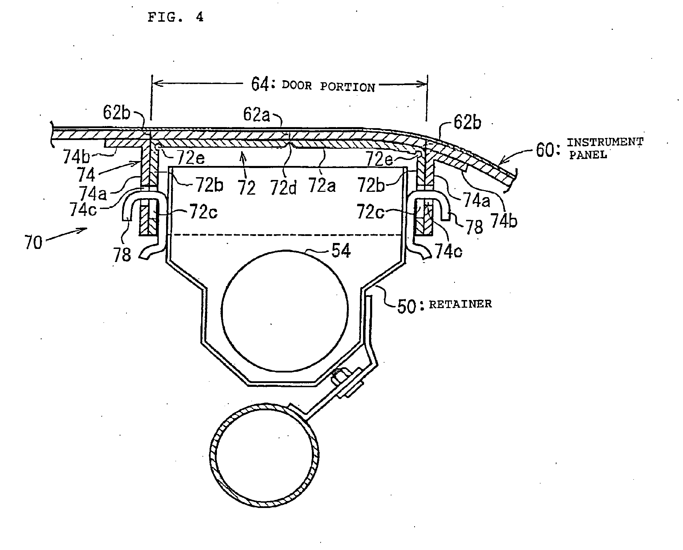

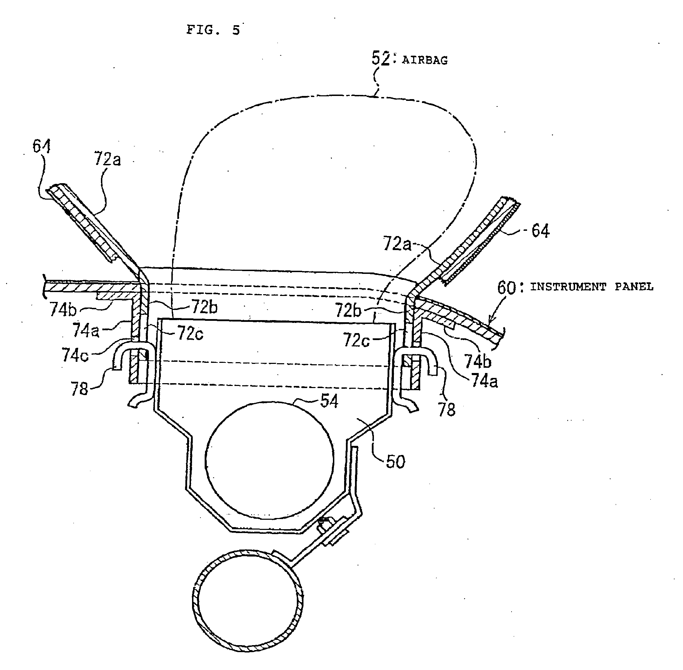

As illustrated in FIG. 4, an airbag 52 being folded, (in FIG. 5) is housed in a retainer 50, which has a shape of an open-top container and is configured to be capable of being expanded by an inflator 54.

A portion above the retainer 50 is covered with a module cover (instrument panel) 60. Concave ridge-shaped tear lines 62a, 62b are formed in a module cover 60. A tear line 62b is formed to extend around along an upper edge of the retainer 50, and an inside area surrounded by the tear line 62b serves as a door portion 64. The tear line 62a extends so as to longitudinally traverse through a center of the door portion 64.

A door frame 70 formed of a door frame movable member 72 and a door frame fixation member 74 is provided at a rear face of the module cover 60. The door frame fixation member 74 has a rectangular frame shape and the door frame movable member 72 is slidably fit into inside thereof.

The door frame movable member 72 is provided with a lining plate portion 72a overlapping with the door portion 64 of the module cover 60 and a leg piece 72b that serves as a leg portion extending downward from both sides of the lining plate portion 72a as shown in FIG. 4, and a hooking hole 72c is formed in the leg piece 72b. A tear line 72d is formed in the lining plate portion 72a in a position overlapping with the tear line 62a. A hinge groove 72e formed of a concave ridge is provided along an intersecting corner portion of the lining plate portion 72a with the leg piece 72b.

The lining plate portion 72a is fixed to a rear face of the door portion 64 of the module cover 60 by means of vibration welding.

The door frame fixation member 74 is provided with a leg frame 74a serving as a rectangular frame-shaped leg portion extending around an outer periphery of the retainer 50, and a flange portion 74b extending outward from an upper end of the leg frame 74a. The flange portion 74b is fixed to a peripheral portion of the door portion 64 in the module cover 60 by means of vibration welding. A hooking hole 74c is formed in the leg frame 74a.

A hook 78 fixed to the retainer 50 is inserted into the hooking holes 72c, 74c.

When the inflator 54 is operated to blow out gas, the door frame movable member 72 is moved upward (lifted) by being pressed upward by the expanding airbag 52, as shown in FIG. 5. The module cover 60 is burst along the tear line 62b and the door portion 64 is cut off from the surrounding module cover 60. The door portion 64 is further moved upward with the door frame movable member 72, and the tear line 72d of the lining plate portion 72a and the tear line 62a of the door portion 64 are burst by being pressed by the airbag 52. Further, the door portion 64 starts to open like a door being separated into two ways of the left and the right direction and the airbag 52 is expanded in a vehicle cabin as shown in FIG. 5.

Thus, the door portion 64 performs lifting operation and is separated from the surrounding module cover 60, and thereby, the door portion 64 smoothly starts to open without receiving reaction force against a deformation from the surrounding module cover 60.

I. In an airbag apparatus in the patent document 1, illustrated in Figs. 4 through 6, a door frame fixation member 74 and a door frame movable member 72 are molded into separate bodies, respectively.

When the door frame movable member 72 and the door frame fixation member 74 are thus separately molded, the molding work is troublesome and the molding cost is increased.

It is an object of the present invention to facilitate manufacturing of a cover for use in a type of an airbag apparatus provided with a door frame movable member and a door frame fixation member at a rear face of an interior panel, in which a door portion is opened while the door frame movable member is performing lifting operation.

II. In an airbag apparatus in the patent document 1, each of the door frame fixation member 74 and the door frame movable member 72 is molded separately from a module cover 60, and is combined with the module cover 60 by means of ultrasonic welding (described in the paragraph number 0016 in the patent document 1)

Thus, when the door frame movable member 72 and the door frame fixation member 74 are molded separately from the module cover 60 and are fixed by means of ultrasonic welding, not only the work for molding and ultrasonic welding is troublesome but also positioning accuracy for the door frame movable member 72 and the door frame fixation member 74 is possible to be insufficient.

It is another object of the present invention to obtain high dimensional accuracy of a cover in a mode.

A cover for use in an airbag apparatus according to Claim 1 is characterized by including an interior panel constituting part of an inner face of a vehicle cabin, a door portion configured to start to open inside the vehicle cabin like a door and formed in the interior panel, a door frame movable member including a lining plate portion fixed to a rear face of the door portion and a leg portion standing from a side edge of the lining plate portion, and a door frame fixation member including a flange portion fixed to a peripheral part of the door portion in the interior panel and a leg portion standing from the flange portion, in which the door frame movable member and the door frame fixation member are integrally formed.

The cover for use in the airbag apparatus according to Claim 2 is characterized in that, in the cover for use in the airbag apparatus according to Claim 1, the door frame movable member and the door frame fixation member are integrally formed of a same material.

The cover for use in the airbag apparatus according to Claim 3 is characterized in that, in the cover for use in the airbag apparatus according to either one of Claims 1 or 2, the leg portion of the door frame movable member and the leg portion of the door frame fixation member are arranged to face each other and are serially connected together at each of base end sides thereof through a low strength portion to be burst when an airbag is expanded.

The cover for use in the airbag apparatus according to Claim 4 is characterized in that, in the cover for use in the airbag apparatus according to Claim 3, the low strength portion has a wall thickness smaller than that of the lining plate portion and that of the flange portion.

The cover for use in the airbag apparatus according to Claim 5 is characterized in that, in the cover for use in the airbag apparatus according to either one of Claims 1 or 2, the leg portions of the door frame movable member and the door frame fixation member are integrally formed so as to be serially connected together at each of tip end sides in standing directions thereof.

The cover for use in the airbag apparatus according to Claim 6 is characterized in that, in the cover for use in the airbag apparatus according to Claim 5, the leg portion of the door frame movable member and the leg portion of the door frame fixation member are arranged to face each other by turning back a portion of the leg portions at the tip end sides in the standing directions after being integrally formed so as to be serially connected together.

The cover for use in the airbag apparatus according to Claim 7 is characterized in that, in the cover for use in the airbag apparatus according to any one of Claims 1 through 6, the door portion is configured to be separated into two pieces of a first piece and a second piece, and in which each of the first piece and the second piece is configured to start to open being rotated like a door toward inside of the vehicle cabin, and in which the lining plate portion of the door frame movable member is provided to serve as a first lining plate portion disposed only at the rear face of the first piece, and a second lining plate portion that is serially connected to the door frame fixation member is fixed to a rear face of the second piece, and in which the first lining plate portion and the second lining plate portion are separated.

The cover for use in the airbag apparatus according to Claim 8 is characterized in that, in the cover for use in the airbag apparatus according to any one of Claims 1 through 7, the door frame movable member and the door frame fixation member, and the interior panel are integrally formed by means of double-shot molding process.

The cover for use in an airbag apparatus according to Claim 9 is characterized by including, the cover for use in the airbag apparatus according to any one of Claims 1 through 8, a retainer arranged to face a rear side of the interior panel, an airbag housed in the retainer, and an inflator for expanding the airbag, in which the leg portion of the door frame movable member and the leg portion of the door frame fixation member are hooked with the retainer via a hooking member.

A cover for use in an airbag apparatus with respect to the present invention is configured such that the door frame movable member and the door frame fixation member are integrally formed and therefore, the cover is easy to manufacture.

Further, in the airbag apparatus in the present invention, when the inflator is operated to blow out gas, the door frame movable member is also moved upward (lifted) by being pressed upward by an expanding airbag, and the door portion is cut off and separated from a surrounding interior panel. The door portion is further moved upward together with the door frame movable member and starts to open like a door, and the airbag is expanded into a vehicle cabin. Because the door portion is thus lifted and separated from the surrounding interior panel, the door portion starts to smoothly open without receiving reaction force against a deformation from the surrounding interior panel.

As described in Claim 2, the door frame movable member and the door frame fixation member are integrally formed of the same material and therefore, a manufacturing cost can be further reduced.

In the present invention, as described in Claim 3, a low strength portion is provided between a base end side of a leg portion of the door frame movable member and that of a leg portion of the door frame fixation member. As a result, the door frame movable member is promptly cut off from the door frame fixation member when the door frame movable member is lifted.

As described in Claim 4, a wall thickness of the low strength portion is set to be smaller than that of a lining plate portion of the door frame movable member and that of a flange portion of the door frame fixation member. As a result, the door frame movable member is smoothly cut off from the door frame fixation member along the low strength portion.

As described in Claim 5, the door frame movable member and the door frame fixation member may be integrally formed in a manner such that, the leg portions are serially connected at each of tip end sides in standing directions thereof. In this case, when a portion of the leg portions is turned back at the tip end sides in the standing directions, as described in Claim 6, the leg portion of the door frame fixation member and the leg portion of the door frame movable member can be integrally formed in serial surface, and it is possible to perform forming operation more easily.

When a first lining plate portion connected to the door frame movable member and a second lining plate portion connected to the door frame fixation member are provided in separate bodies, as describe in Claim 7, only a first piece side, which is lined by the first lining plate portion in the door frame, can be lifted.

As described in Claim 8, the interior panel, the door frame movable member, and the door frame fixation member are integrally formed by means of double-shot molding process. Thereby, the cover is easy to manufacture and is formed in good dimensional accuracy.

FIG. 1(a) is a cross-sectional view illustrating an airbag apparatus with respect to an embodiment of a present invention, and FIG. 1(b) is a partially enlarged view of FIG. 1(a);
FIG. 2 is a cross-sectional view illustrating the airbag apparatus depicted in FIG. 1(a) in operation;
FIG. 3(a) is a perspective view illustrating a door frame of the airbag apparatus depicted in Figs. 1(a) and 1(b), and FIG. 3(b) is a perspective view illustrating a leg plate of a door frame movable member of the airbag apparatus depicted in Figs. 1(a) and 1(b);
FIG. 4 is a cross-sectional view illustrating a conventional airbag apparatus;
FIG. 5 is a cross-sectional view of the airbag apparatus depicted in FIG. 4 in operation;

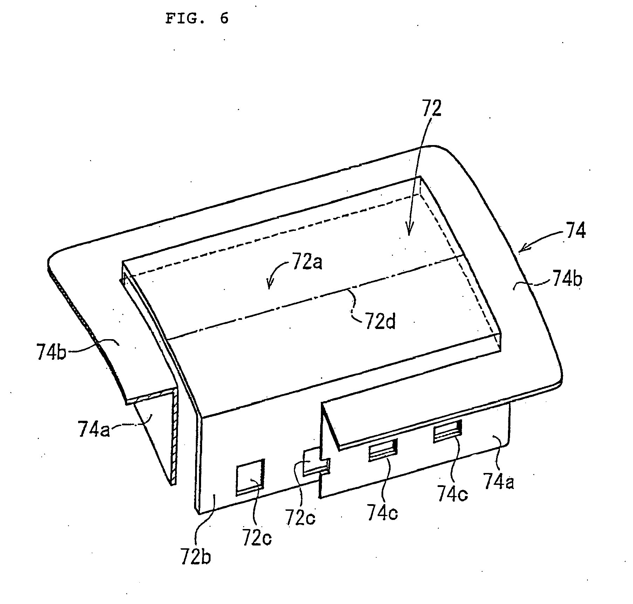

FIG. 6 is a perspective view illustrating the door frame of the airbag apparatus depicted in FIG. 4;
FIG. 7(a) is a cross-sectional view illustrating an airbag apparatus with respect to another embodiment of the present invention, and FIG. 7(b) is a partially enlarged view of FIG. 7(a);
FIG. 8 is a cross-sectional view illustrating the airbag apparatus depicted in FIG. 7(a) in operation;
FIG. 9 is a perspective view illustrating a molded product of a door frame of the airbag apparatus depicted in Figs. 7(a) and 7(b);
Figs. 10(a) and 10(b) are cross-sectional views illustrating a molded product of the door frame depicted in FIG. 9; and
FIG. 11(a) is a cross-sectional view illustrating an airbag apparatus with respect to still another embodiment of the present invention, and FIG. 11(b) is a partially enlarged view of FIG. 11(a).

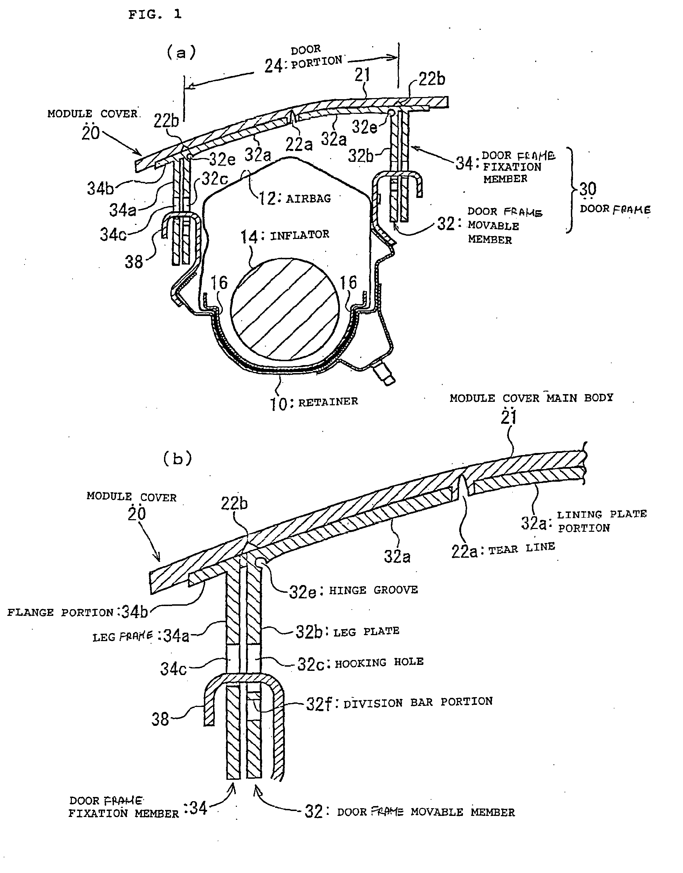

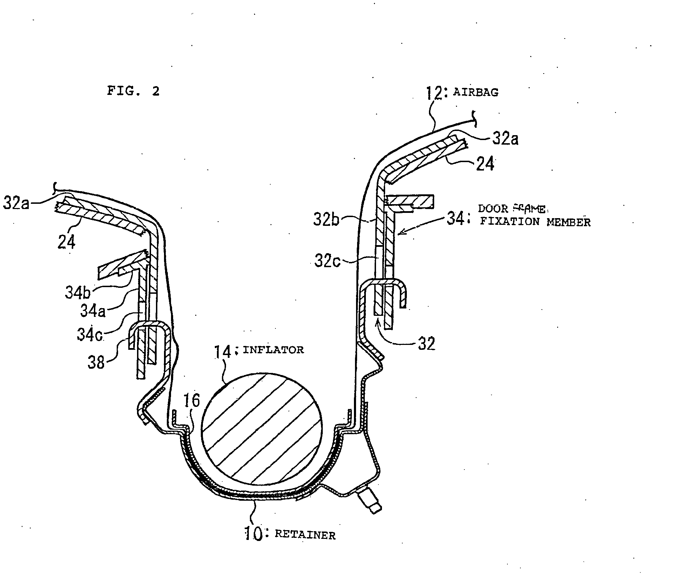

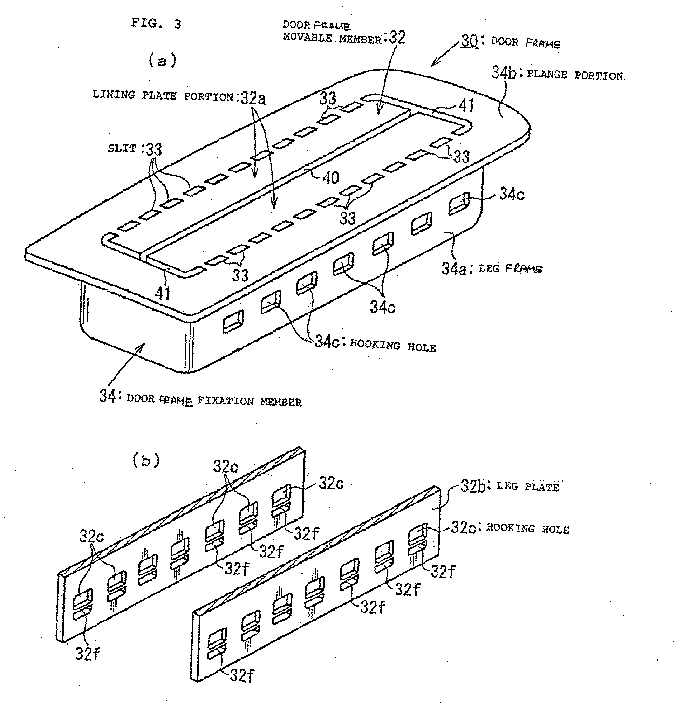

Hereinbelow, the embodiment of the present invention will be explained referring to the drawings. FIG. 1(a) shows a cross-section of an airbag apparatus with respect to an embodiment of a present invention, and FIG. 1(b) is a partially enlarged view of FIG. 1(a). FIG. 2 shows a cross-section of the airbag apparatus of FIG. 1(a) in operation. FIG. 3(a) is a perspective view illustrating a door frame of the airbag apparatus of Figs. 1(a) and 1(b), and FIG. 3(b) is a perspective view illustrating a leg plate of a door frame movable member of the airbag apparatus of Figs. 1(a) and 1(b).

The airbag apparatus is an airbag apparatus for a passenger seat, which is mounted on a module cover. An airbag 12 of the airbag apparatus is folded and housed in a retainer 10 having a shape of an open-top container and is configured to be capable of being expanded by an inflator 14. The airbag 12 is attached to the retainer 10 by means of an attaching cramp 16.

A portion above the retainer 10 is covered with a module cover 20. Tear lines 22a, 22b formed of a ridge are provided in the module cover 20. The tear line 22b is disposed so as to extend around along an upper edge of the retainer 10, and an inside area surrounded by the tear line 22b serves as a door portion 24. The tear line 22a extends so as to longitudinally traverse through a center of the door portion 24.

The module cover 20 is formed of a module cover main body 21 and a door frame 30 including a door frame movable member 32 and a door frame fixation member 34. The door frame 30 is fixed to a rear face of the module cover main body 21. The door frame fixation member 34 has a rectangular frame shape and a pair of the L-shaped door frame movable members 32 is disposed inside thereof.

The door frame movable member 32 includes a leg plate 32b having an elongated rectangular shape serving as a leg portion and a lining plate portion 32a connected to an upper end of the leg plate 32b. The lining plate portion 32a is combined with a rear face of the door portion 24 of the module cover 20. A slit 40 (shown in FIG. 3) is formed between each of the lining plate portions 32a. A tear line 22a is formed at the rear face of the module cover main body 21 so as to overlap with the slit 40. As shown in FIG. 3, slits 41 are connected at both ends of the slit 40 so as to extend in a direction intersecting with the slit 40.

A hooking hole 32c is formed in the leg plate 32b. The hooking hole 32c has a shape that is elongated in a moving direction of the door frame movable member 32 (namely, in a direction perpendicular to the rear face of the module cover main body 21). In this embodiment a division bar portion 32f is provided in the hooking hole 32c in the middle of the moving direction of the door frame movable member 32. A hinge groove 32e formed of a concave ridge is provided along an intersecting corner portion of the lining plate portion 32a with the leg plate 32b.

The door frame fixation member 34 is provided with a leg frame 34a serving as a rectangular frame-shaped leg portion extending around an outer periphery of the retainer 10 and a flange portion 34b extending outward from an upper end of the leg frame 34a, and the flange portion 34b is combined with a peripheral portion of the door portion 24 in the module cover main body 21. A hooking hole 34c is formed in the leg frame 34a at a position overlapping with the hooking hole 32c.

A hook-shaped hook 38 fixed to the retainer 10 is inserted into the hooking holes 32c, 34c.

In this embodiment, the door frame movable member 32 and the door frame fixation member 34 that define the door frame 30 are integrally formed in a serial manner from the same material. The leg plate 32b of the door frame movable member 32 and the leg frame 34a of the door frame fixation member 34 are disposed to face each other across a slight clearance. Both of base end sides (upper end side in FIG. 1(a)) of the leg plate 32b and the leg frame 34a are connected together, however, slits 33 forming a perforated line is provided in line therebetween in predetermined intervals. The slits 33 serve as a low strength portion such that the door frame 30 can be cut when the door frame movable member 32 is lifted.

In this embodiment, the module cover 20 is integrally formed by means of double-shot molding process. For example, in a mold formed of a core and a cavity, the door frame 30 is molded by means of injection molding process first. Then, after exchanging the cavity, the module cover main body 21 is formed by means of the injection molding process so as to be connected to the door frame 30. Thus, the double-shot molding process for forming the module cover 20 is completed.

In performing the injection molding process, in particular, when the module cover 20 is formed using an advanced cavity-core system mold for ultra low-pressure injection molding (ULPAC mold) having a heat-retention layer, a sink mark on a module cover surface is not caused and thereby obtaining a module cover having a good appearance.

The operation of the airbag apparatus provided with the module cover 20 is as follows.

When the inflator 14 is operated to blow out the gas, as shown in FIG. 2, the door frame movable member 32 is moved upward (lifted) by being pressed upward by the expanding airbag 12. While the door frame movable member 32 is being lifted, the hook 38 is moved downward in the hooking hole 32c by a relative movement, as shown in FIG. 2, thereby deforming and bursting the division bar portion 32f. As a result, the door frame 30 is burst along the slits 33. The module cover 20 is burst along the tear line 22b and the door portion 24 is cut off from the surrounding module cover 20. The door portion 24 is further moved upward with the door frame movable member 32 and the tear line 22a of the door portion 24 burst resulting from being pressed by the airbag 12. The door portion 24 and each of the lining plate portions 32a start to open like a door, while being separated in two ways in the left and the right directions as shown in FIG. 2. Thus, the airbag 12 is expanded in the vehicle cabin.

Thus, because the door portion 24 is lifted and separated from the surrounding module cover 20, the door portion 24 starts to smoothly open without receiving reaction force against a deformation from the surrounding module cover 20.

The module cover 20 of the airbag apparatus is formed by integrally molding the door frame 30 which is defined by the door frame movable member 32 and the door frame fixation member 34 and the module cover main body 21 by means of double-shot molding process. Thus the manufacturing of the module cover 20 is facilitated. In addition, because the door frame movable member 32 and the door frame fixation member 34 are integrally formed in a serial manner, a positional and dimensional accuracy of each of the door frame movable member 32 and the door frame fixation member 34 is obtained.

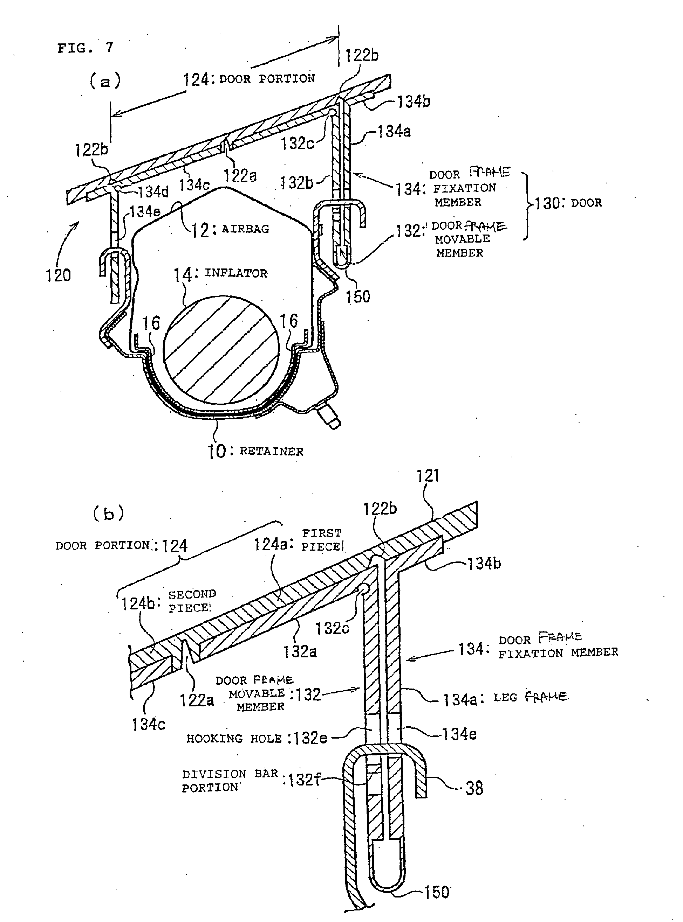

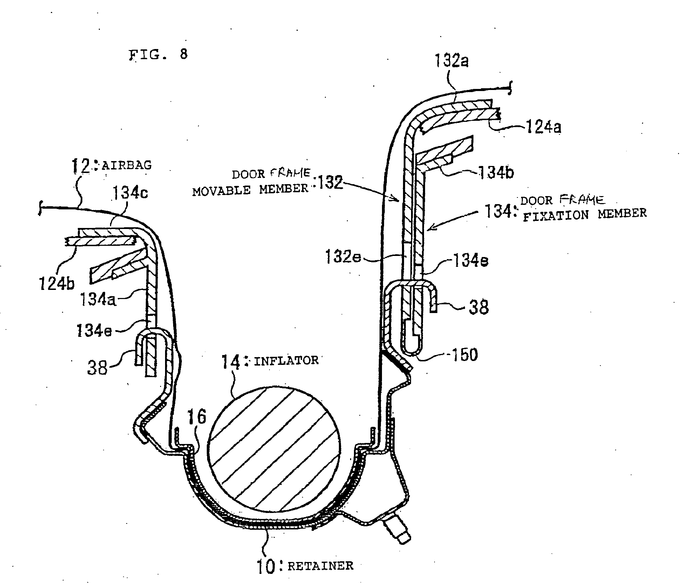

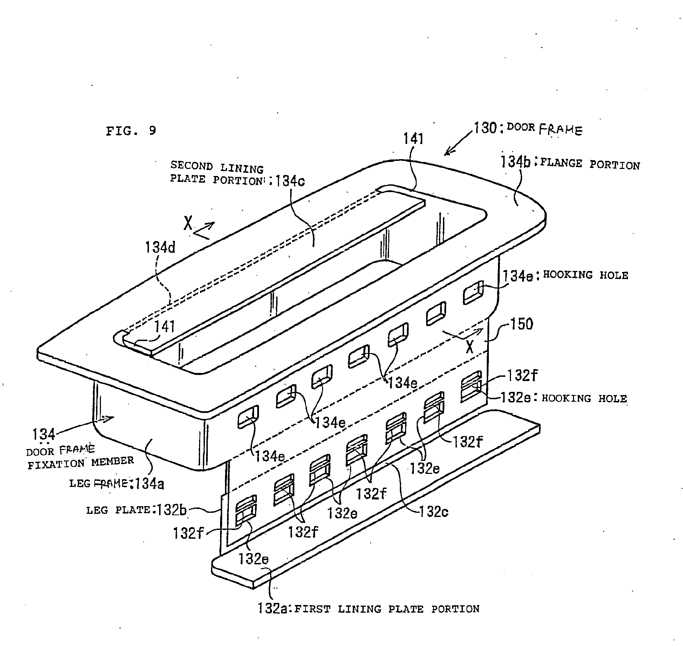

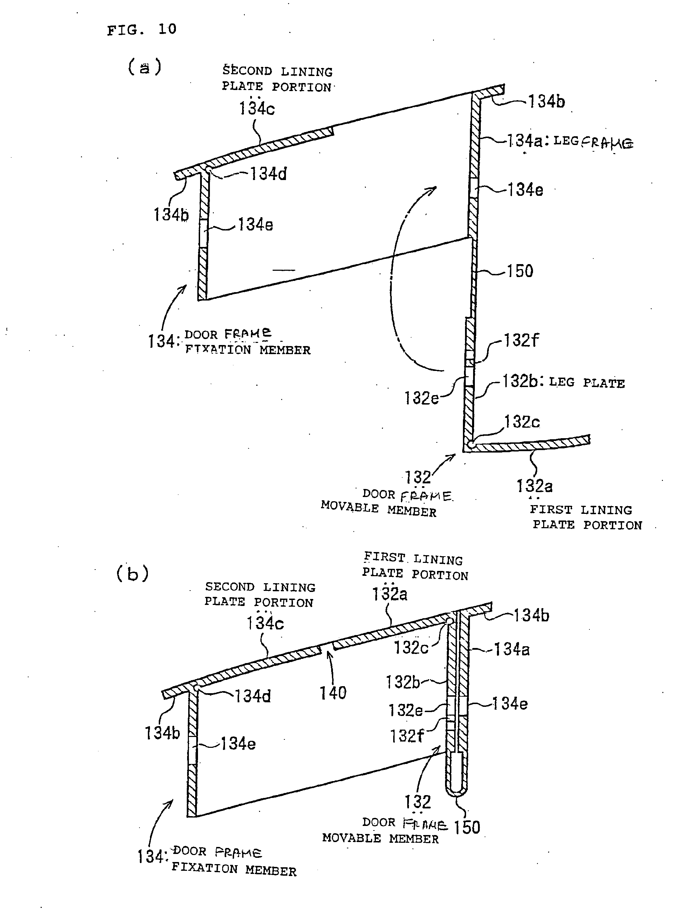

FIG. 7(a) shows a longitudinal cross-section of an airbag apparatus with respect to another embodiment of the present invention, and FIG. 7(b) is a partially enlarged view of FIG. 7(a). FIG. 8 shows a cross-section of the airbag apparatus depicted in FIG. 7(a) in operation. FIG. 9 is a perspective view illustrating a molded product of a door frame of the airbag apparatus depicted in Figs. 7(a) and 7(b). Figs. 10(a) shows a cross-section taken along a line X-X in FIG. 9, and 10(b) shows a cross-section of the same part of FIG. 10(a) after a door frame movable member is turned back. In the explanation below, the front and rear direction is defined to be the front and rear direction of a motor vehicle in a state that the airbag apparatus is mounted on the motor vehicle, and the left and right direction is defined to be the width direction of the motor vehicle.

The module cover 120 includes a module cover main body 121 that covers an upper portion of the retainer 10 and the door frame 130 having the movable member 132 fixed to a rear face of the module cover main body 121 and a door frame fixation member 134. The door frame fixation member 134 has a rectangular shape and the door frame movable member 132 is disposed inside thereof.

In this embodiment, tear lines 122a, 122b formed of a concave ridge are provided at the rear face of the module cover main body 121. The tear line 122b is disposed in a manner so as to extend along an upper edge of the retainer 10 and an inside area surrounded by the tear line 122b serves as a door portion 124. The tear line 122a is extended in a manner so as to traverse a center of the door portion 124.

As shown in Figs. 7(a) and (b), in this embodiment, an upper face of the module cover main body 121 is slanted to have an upslope from a front side of the motor vehicle, that is, a side of a windshield (the left side in FIG. 7(a)) to a rear side of the motor vehicle, that is, a side of an occupant seated in a passenger seat (the right side in FIG. 7(a)). A peripheral edge portion of the module cover main body 121 overhangs outward from the upper edge of the retainer 10. Accordingly, as shown in Figs. 7(a) and (b), an edge portion of the module cover main body 121 at the rear side of the motor vehicle is located at a position higher than an edge portion of the door portion 124 at the rear side of the motor vehicle. An edge portion of the module cover main body 121 at the front side the motor vehicle is located at a position lower than an edge portion of the door portion 124 at the front side of the motor vehicle.

The door portion 124 bursts open along the tear lines 122a and 122b, by an expansion pressure of the airbag 12 when the airbag 12 is expanded, and starts to open like a door being separated into a first piece 124a at a rear side from the tear line 122a in the motor vehicle (the side of the occupant seated in the passenger seat) and a second piece 124b at a front side from the tear line 122a in the motor vehicle (the side of the windshield).

The door frame movable member 132 includes a first lining plate portion 132a fixed to a rear face of the first piece 124a and a rectangular leg plate 132b serving as a leg portion and extending downward from an edge portion of the first lining plate portion 132a on the rear side of the motor vehicle. The first lining plate portion 132a has a size that occupies only the first piece 124a in the door portion 124. A hinge groove 132c formed of a concave ridge is provided along an intersecting corner portion of the first lining plate portion 132a with the leg plate 132b.

A hooking hole 132e is formed in the leg plate 132b. The hooking hole 132c has a shape elongated in a moving direction of the door frame movable member 132 (that is, a direction perpendicular to the rear face of the module cover main body 121). In this embodiment, a division bar portion 132f is provided in the hooking hole 132e in the middle of the moving direction of the door frame movable member 132.

The door frame fixation member 134 is provided with a leg frame 134a serving as a rectangular frame-shaped leg portion and extending around an outer periphery of the retainer 10, a flange portion 134b extending outward from an upper end of the leg frame 134a, and a second lining plate portion 134c which is disposed at a rear side of the second piece 124b, and in which an edge portion at the front side of the motor vehicle is serially connected to an upper edge of the leg frame 134a at the front side of the motor vehicle. The flange portion 134b is fixed to a rear face of a peripheral portion of the door portion 124 in the module cover main body 121 and the second lining plate portion 134c is fixed to a rear face of the second piece 124b. The leg plate 132b of the door frame movable member 132 is disposed in a manner so as to face an inside face of the leg frame 134a with the inside face being at the front side of the motor vehicle.

The second lining plate portion 134c has a size that occupies only the second piece 124b in the door portion 124. A hinge groove 134d formed of a concave ridge is provided at an intersecting corner portion of the second lining plate portion 134c with the leg frame 134a.

A hooking hole 134e is formed at each face of the leg frame 134a at the front side and the rear side of the motor vehicle. In the hooking hole 134e, the hooking hole 134e formed at a face of the leg frame 134a at the rear side of the motor vehicle is disposed at a position overlapping with the hooking hole 132e formed at the leg plate 132b of the door frame movable member 132.

A slit-like clearance 140 (shown in FIG. 10(b)) exists between a front edge portion of the first lining plate portion 132a and a rear edge portion of the second lining plate portion 134c. A tear line 122a is provided at the rear face of the module cover main body 121 in an overlapping manner with the clearance 140. As shown in FIG. 9, slit-like clearances 141 also exist between both the left and right side edge portions of the lining plate portions 132a, 134c, and the left and right inside faces of the leg frame 134a, respectively. Both end sides of the clearance 140 is allowed to communicate with the clearances 141, respectively.

The hook 38 fixed to the retainer 10 is inserted into the hooking holes 132e, 134e and thereby, the door frame movable member 132 and the door frame fixation member 134 are hooked by the hook 38.

The door frame movable member 132 and the door frame fixation member 134 are integrally formed of the same material in serial manner. In detail, in this embodiment, a bottom end portion of the leg plate 132b of the door frame movable member 132 (a bottom end portion of the door frame 130 when it is completed to be a product, as shown in Figs. 7(a), 7(b), 8, and 9) is connected to a bottom end portion of the leg frame 134a of the door frame fixation member 134, which faces the leg plate 132b through a connecting portion 150 which is integrally formed therewith. The connecting portion 150 is configured to be thinner and more flexible than the leg frame 134a and the leg plate 132b.

As shown in Figs. 9 and 10(a), in the molded product of the door frame 130, the leg plate 132b is formed in a manner so as to be connected to the leg frame 134a at a side beneath the leg frame 134a on the same surface through the connecting portion 150. In addition, the leg plate 132b has a posture, which is upside down relative to the posture of the door frame 130 when it is completed to be a product, and the leg plate 132b also has a posture that the first lining plate portion 132a extends outward from the leg frame 134a. When the door frame 130 is formed to be a product, as shown in Figs. 10(a) and 10(b), the leg plate 132b is turned back upward from the middle of the connecting portion 150 and inward the leg frame 134a, and is faced an inside face of the leg frame 134a.

When the door frame 130 is attached to the module cover main body 121, the flange portion 134b is overlapped with a rear face of a peripheral portion of the door portion 124 in the module cover main body 121. The first and second lining plate portions 132a, 134c are overlapped with a rear face of the first piece 124a and that of the second piece 124b of the door portion 124. The overlapped portions are combined by a combination means, such as vibration welding or the like.

In addition, the connecting portion 150 may be cut off or removed so as to separate the leg plate 132b and the leg frame 134a after completion of attaching the door frame 130 to the module cover main body 121.

Operation of the airbag apparatus provided with the module cover 120 is as follows.

When the inflator 14 is operated to blow out the gas, as shown in FIG. 8, the door frame movable member 132 is moved upward (lifted) by being pressed by the expanding airbag 12. Further, the hook 38 moves downward in the hooking hole 132e by a relative movement when the door frame movable member 132 is being lifted, as shown in FIG. 8, and the division bar portion 132f is deformed or ruptured.

Further, the tear lines 122a, 122b are burst by the expansion pressure of the airbag 12, and the door portion 124 is separated into the first piece 124a and the second piece 124b. At this moment, the first piece 124a, which is lined with the lining plate portion 132a and serially connected to the door frame movable member 132, is cut off and separated from the module cover main body 121 and moves upward together with the door frame movable member 132. On the other hand, the second piece 124b, which is lined with the lining plate portion 134c and serially connected to the door frame fixation member 134, is not be lifted.

Along with the expansion progress of the airbag 12, the first piece 124a starts to open toward the rear side of the motor vehicle together with the lining plate portion 132a, by being pressed by the airbag 12, rotating around the hinge groove 132c serving as a base point, and the second piece 124b starts to open toward the front side of the motor vehicle together with the lining plate portion 134c rotating around the hinge groove 134d serving as a base point.

In this embodiment, the edge portion of the module cover main body 121 at the rear side of the motor vehicle is positioned higher than that of the first piece 124a at the rear side of the motor vehicle. Because the first piece 124a starts to open toward the rear side of the motor vehicle with being lifted upward, the first piece 124a can start to open more largely toward the rear side of the motor vehicle (at an angle closer to a horizontal line compared to the slope of the edge portion of the module cover main body 121, or an angle to be a down-slope toward the rear side of the motor vehicle).

Further, because the first piece 124a is separated from the surrounding module cover main body 121 by the lifting operation, the first piece 124a smoothly starts to open without receiving reaction force against a deformation from the surrounding module cover main body 121.

As described in this embodiment, the first piece 124a in the door portion 124, which is disposed at a rear side of the motor vehicle, namely a side of the occupant seated in the passenger seat, is lifted, and largely and smoothly starts to open to a side of the occupant seated in the passenger seat and thereby, the airbag 12 becomes easy to develop to the side of the occupant seated in the passenger seat.

In this embodiment, because only the first piece 124a in the door portion 124 is lifted, the expansion pressure of the airbag 12 for the lifting operation can be decreased. As a result, an inflator having relatively low power can be used as the inflator 14.

The module cover 120 of the airbag apparatus is molded by integrally forming the door frame movable member 132 and the door frame fixation member 134, and accordingly, easy to manufacture.

In particular, in this embodiment, when the door frame 130 is molded, the leg frame 134a of the door frame fixation member 134 and the leg plate 132b of the door frame movable member 132 are flatly molded through the connecting portion 150. Then, the leg plate 132b is turned back in the middle of the connecting portion 150. Thus, a molding operation for the door frame 130 is very easy.

Further, the connecting portion 150 may connect the bottom end portion of the leg plate 132b with the bottom end portion of the leg frame 134a over the entire length thereof, or may partially connect both the bottom end portions thereof.

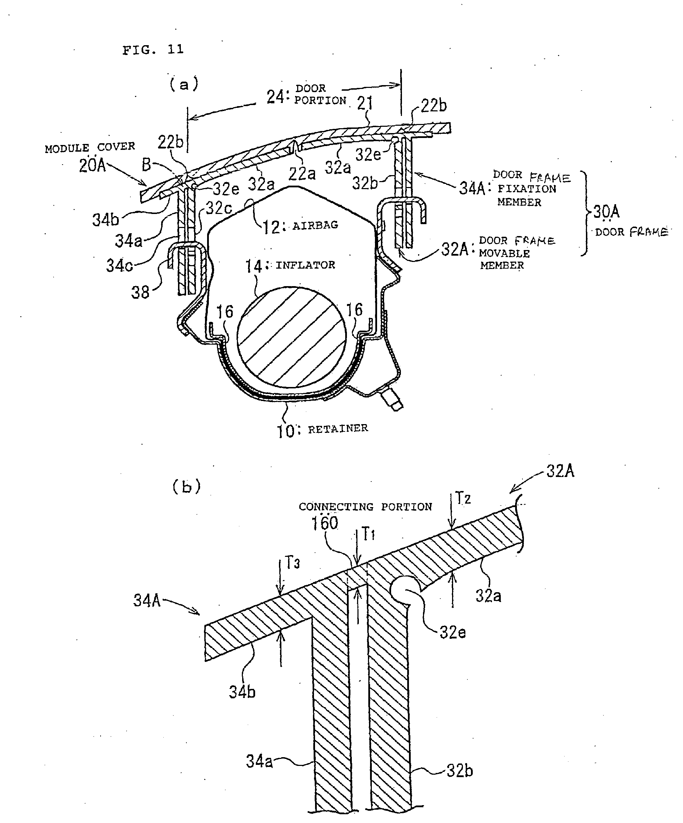

FIG. 11(a) shows a cross-section of a cover for use in the airbag apparatus with respect to another embodiment of the present invention, and FIG. 11(b) is a partially enlarged view of B-portion depicted in FIG. 11(a).

Similar to the module cover 20, in Figs. 1 through 3, described above, the module cover 20A of this embodiment is also provided with the module cover main body 21 and a door frame 30A including a door frame movable member 32A and a door frame fixation member 34A, both of which are fixed to a rear face of the module cover main body 21. Each of base end portions (upper end portion in FIG. 11(a)) of the leg plate 32b of the door frame movable member 32A and the leg frame 34a of the door frame fixation member 34A, which face each other, is connected by a connecting portion 160 (shown in FIG. 11(b), though reference numerals are omitted in the embodiment, shown in Figs. 1 through 3.). The door frame movable member 32A and the door frame fixation member 34A are integrally formed of the same material in a serial manner through the connecting portion 160.

In the embodiment in Figs. 1 through 3, described above, the connecting portion 160 is configured to have strength lower than that of the lining plate portion 32a of the door frame movable member 32 (more in detail, the hinge groove 32e at a base end side of the lining plate portion 32a) and the flange portion 34b of the door frame fixation member 34. However, in this embodiment, as shown in FIG. 11(b), a wall thickness (thickness in above and below direction in FIG. 11(b)) T₁ of the connecting portion 160 is set smaller than the thickness T₂ of the lining plate portion 32a (hinge groove 32e) and the thickness T₃ of the flange portion 34b. Thus, the connecting portion 160 is configured to have strength lower than that of the lining plate portion 32a (hinge groove 32e) and the flange portion 34b.

Further, in FIG. 11(b), the illustration for the module cover main body 21 is omitted so as to clarify the construction of the vicinity of the connecting portion 160.

Furthermore, it is preferable to have the wall thickness T₁ of the connecting portion 160 as small as possible. When the wall thickness T₁ is excessively small, however, there is a possibility that flow of a resin material from one side of the connecting portion 160 to the other side thereof is disturbed in a mold when molding a door frame. Therefore, the wall thickness T₁ is preferable to be set within a range from about 0.6 to about 1.5 mm.

In the cover for use in the airbag apparatus provided with the module cover 20A, when the inflator 14 is operated and the airbag 12 is thereby expanded, the lining plate portion 32a is pressed upward by means of the airbag 12. A door frame 30A is burst along the connecting portion 160 which has a strength lower than that of the lining plate portion 32a (hinge groove 32e) or that of the flange portion 34a. As a result, the door frame movable member 32A is separated from the door frame fixation member 34A and is lifted up.

As described in this embodiment, when the wall thickness T₁ of the connecting portion 160 is set smaller than the wall thickness T₂ of the lining plate portion 32a and the wall thickness T₃ of the flange portion 34a resulting in forming the connecting portion 160 to be a low strength portion, the connecting portion 160 becomes to be more smoothly burst.

Each of the above-described embodiments is illustrative of the present invention and the present invention is not limited to each of the embodiments.

Although each of the module covers 120, 20A is described as an interior panel in each of the above-described embodiments, an instrument panel, or the like may be applicable.

In the embodiments illustrated in Figs. 7(a) through 10(b), the module cover 120 is configured to be sloping such that a side of the upper face of the module cover 120 at the rear side of the motor vehicle (namely, the side of the occupant seated in the passenger seat) is higher than that at the front side of the motor vehicle (namely, the side of the windshield). However, in the present invention, the upper face of the module cover 120 (or the instrument panel or the like) may be flat (approximately horizontal), or may be sloping such that the upper face of the module cover 120 at the front side of the motor vehicle is higher than that at the rear side of the motor vehicle.

When the upper face of the module cover, the instrument panel, or the like is sloping, the first piece of the door portion that is lifted when the airbag is expanded, may be disposed at a side of either high position in the slope or low position in the slope. However, the first piece to be lifted is preferable to be disposed at a side of the door portion closer to the occupant.

In the present invention, not only the first piece of the door portion, but also the second piece thereof may have a configuration to be lifted and started to open. In addition, in the present invention, the door portion may be configured to start to open in one-sheet door shape without being separated into two pieces, or may be configured to start to open being separated into more than two pieces a piece in the pieces of the door portion may be configured to start to open rotating while being separated from the module cover, the instrument panel, or the like as described in the aforementioned embodiments, or may be configured to start to open rotating in a hinge-like manner remaining serially connected to the module cover, instrument panel, or the like.

Although the aforementioned embodiments is illustrative of the present invention applied to an airbag apparatus for use in a passenger seat of a motor vehicle, the present invention is applicable to various kinds of airbag apparatuses other than the above described.

## Claims

1. A cover for use in an airbag apparatus comprising:
an interior panel constituting part of an inner face of a vehicle cabin;
a door portion configured to open inside the vehicle cabin like a door and formed in the interior panel;
a door frame movable member comprising a lining plate portion fixed to a rear face of the door portion and a leg portion standing from a side edge of the lining plate portion; and
a door frame fixation member comprising a flange portion fixed to a peripheral part of the door portion in the interior panel and a leg portion standing from the flange portion,
wherein the door frame movable member and the door frame fixation member are integrally formed.

2. The cover for use in the airbag apparatus according to Claim 1, wherein the door frame movable member and the door frame fixation member are integrally formed of a same material.

3. The cover for use in the airbag apparatus according to either one of Claims 1 or 2, wherein the leg portion of the door frame movable member and the leg portion of the door frame fixation member are arranged to face each other and are serially connected together at each of base end sides thereof through a low strength portion to be burst when an airbag is expanded.

4. The cover for use in the airbag apparatus according to Claim 3, wherein the low strength portion has a wall thickness smaller than that of the lining plate portion and that of the flange portion.

5. The cover for use in the airbag apparatus according to either one of Claims 1 or 2, wherein the leg portions of the door frame movable member and the door frame fixation member are integrally formed so as to be serially connected together at each of tip end sides in standing directions thereof.

6. The cover for use in the airbag apparatus according to Claim 5, wherein the leg portion of the door frame movable member and the leg portion of the door frame fixation member are arranged to face each other by turning back a portion of the leg portions at the tip end sides in the standing directions after being integrally formed in a manner so as to be serially connected together.

7. The cover for use in the airbag apparatus according to any one of Claims 1 through 6, wherein the door portion is configured to be separated into two pieces of a first piece and a second piece, and wherein each of the first piece and the second piece is configured to start to open being rotated like a door toward inside of the vehicle cabin, and wherein the lining plate portion of the door frame movable member is provided to serve as a first lining plate portion disposed only at the rear face of the first piece, and a second lining plate portion that is serially connected to the door frame fixation member is fixed to a rear face of the second piece, and wherein the first lining plate portion and the second lining plate portion are separated.

8. The cover for use in the airbag apparatus according to any one of Claims 1 through 7, wherein the door frame movable member and the door frame fixation member, and the interior panel are integrally formed by means of double-shot molding process.

9. An airbag apparatus comprising:
the cover for use in the airbag apparatus according to any one of Claims 1 through 8;
a retainer arranged to face a rear side of the interior panel;
an airbag housed in the retainer; and
an inflator for expanding the airbag,
wherein the leg portion of the door frame movable member and the leg portion of the door frame fixation member are hooked with the retainer via a hooking member.
